# EUROPÄISCHE PATENTSCHRIFT

(11) **EP 3 292 027 B1**
(45) Veröffentlichungstag und Bekanntmachung des Hinweises auf die Patenterteilung: **07.07.2021**
(21) Anmeldenummer: 16720422.1
(22) Anmeldetag: 04.05.2016
(51) Int. Cl.: B60R 25/40

(54) **SCHLIESSSYSTEM MIT NOTBETRIEB FÜR EIN KRAFTFAHRZEUG**
ENTRY SYSTEM WITH BACKUP OPERATION FOR A MOTOR VEHICLE
SYSTÈME DE VERROUILLAGE AVEC FONCTIONNEMENT DE SECOURS POUR VÉHICULE À MOTEUR

(30) Priorität: 04.05.2015 DE 102015005549
(43) Veröffentlichungstag der Anmeldung: 14.03.2018
(73) Patentinhaber: Marquardt GmbH, 78604 Rietheim-Weilheim (DE)
(72) Erfinder: MÜLLER, Karl, 78628 Rottweil-Neufra (DE); STEHLE, Wolfgang, 78603 Renquishausen (DE); VOGEL, Stefan, 78073 Dürrheim-Biesingen (DE)
(74) Vertreter: Jostarndt Patentanwalts-AG
(86) Internationale Anmeldenummer: PCT/EP2016/059973
(87) Internationale Veröffentlichungsnummer: WO 2016/177767

(56) Entgegenhaltungen:
- EP-A1- 1 378 401
- EP-A1- 1 533 450
- DE-A1- 4 340 260
- DE-A1- 19 530 721
- DE-A1-102005 035 934
- DE-A1-102006 002 119
- DE-A1-102007 044 871
- DE-A1-102011 117 978
- US-A1- 2010 102 943

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, der Heckklappe o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung von elektromagnetischen Signalen. Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach positiver Auswertung des übertragenen Betriebssignals und damit bei berechtigtem Schlüssel eine Änderung des Zustandes der Steuereinrichtung bewirkbar ist.

Im Kraftfahrzeug befindet sich eine aufladbare Fahrzeugbatterie zur Versorgung der elektrischen Komponenten des Kraftfahrzeugs mit elektrischer Energie. Diese Fahrzeugbatterie dient somit auch als ein erster Energiespeicher zur Energieversorgung der ersten Einrichtung für deren bestimmungsgemäßen Betrieb. Im Schlüssel befindet sich ebenfalls eine Schlüsselbatterie, die im allgemeinen nicht aufladbar ist, als ein zweiter Energiespeicher zur Energieversorgung der zweiten Einrichtung für deren bestimmungsgemäßen Betrieb. Im Falle einer erschöpften Fahrzeugbatterie oder einer erschöpften Schlüsselbatterie, ist das Schließsystem nicht funktionsfähig, so dass ein Zugang in das Kraftfahrzeug nicht mehr möglich ist. Für diesen Notfall ist bisher in einer Autotüre ein mechanisches Schloss integriert, welches mittels eines mechanisches Notschlüssels einen Zugang zum Kraftfahrzeug gestattet. Allerdings sind das mechanische Schloss sowie der mechanische Notschlüssel kostenaufwändig und bieten lediglich eine geringe Diebstahlsicherheit.

Ein weiteres, eine erste und zweite Einrichtung umfassendes Schließsystem, bei dem mittels der zweiten Einrichtung die Zugangs- und/oder Fahrberechtigung für das Kraftfahrzeug in der Art einer KeylessEntry/Go-Funktionalität betätigbar ist, ist aus der DE 10 2006 002 119 A1 bekannt. Bei diesem Schließsystem ist der ersten Einrichtung ein Energieübertragungsmittel, und zwar eine Spule in der Art einer LF(Low Frequency)-Spule, zur Übertragung von Energie aus dem ersten Energiespeicher zugeordnet. Die zweite Einrichtung umfasst einen Transponder, derart dass Energie mittels des Energieübertragungsmittels vom ersten Energiespeicher auf die zweite Einrichtung zu deren Notbetrieb bei erschöpftem zweiten Energiespeicher übertragbar ist. Im Falle einer leeren Schlüsselbatterie ist somit der Zugang zum Kraftfahrzeug ermöglicht. Weiter ist der ersten Einrichtung eine Notbatterie mit einer derartigen Speicherkapazität zugeordnet, dass deren Energie bei erschöpftem ersten Energiespeicher zum Notbetrieb der ersten Einrichtung unter wenigstens einer einmaligen, insbesondere jedoch einer mehrmaligen, Änderung des Zustandes der ersten Einrichtung ausreichend ist. Im Falle einer leeren Fahrzeugbatterie ist somit ebenfalls der zumindest einmalige Zugang zum Kraftfahrzeug ermöglicht.

Des Weiteren ist in der US 2010/102943 A1 ein Schließsystem für die Zugangsberechtigung zu einem Kraftfahrzeug in der Art einer KeylessEntry-Funktionalität beschrieben. Schließlich ist in der EP 1 378 401 A1 ein elektrisches Schloss für ein Kraftfahrzeug und in der DE 102005 035 934 A1 ein Zünd-Start-Schalter für ein Kraftfahrzeug gezeigt.

Der Erfindung liegt die Aufgabe zugrunde, das Schließsystem derart weiterzubilden, dass auf das mechanische Schloss sowie den mechanischen Notschlüssel verzichtet werden kann.

Diese Aufgabe wird bei einem gattungsgemäßen Schließsystem durch die kennzeichnenden Merkmale des Anspruchs 1 gelöst.

Beim erfindungsgemäßen Schließsystem ist in kompakter Bauweise ein weiteres Energieübertragungsmittel, und zwar eine Spule in der Art einer LF(Low Frequency)-Spule, im Kraftfahrzeug zur Übertragung von Energie aus dem ersten Energiespeicher auf die zweite Einrichtung vorgesehen. Bei erschöpftem zweiten Energiespeicher ist dann die Fahrberechtigung mittels des Transponders betätigbar. Vorteilhafterweise ist somit ein Notzugang zum Kraftfahrzeug ermöglicht, ohne dass es eines mechanischen Schlosses sowie mechanischen Notschlüssels bedarf. Weiter ist im Notfall auch ein Starten des Fahrzeuges bei leerer Schlüsselbatterie ermöglicht. Weitere Ausgestaltungen der Erfindung sind Gegenstand der Unteransprüche.

Zwecks besonders ergonomischer Bedienung des Notzugangs durch den Benutzer ist das Energieübertragungsmittel, und zwar insbesondere die Spule in der Art einer LF(Low Frequency)-Spule, an einem Schließelement, also insbesondere im Bereich des Türgriffs in und/oder an der Autotüre, integriert angeordnet. In einfacher Art und Weise wird zusätzlich zur Energieversorgung mittels des Energieübertragungsmittels für die zweite Einrichtung das codierte Betriebssignal zur Authentifikation der zweiten Einrichtung mittels des Transponders sowie des Energieübertragungsmittels bei erschöpftem zweiten Energiespeicher übertragen. Somit ist in vorteilhafter Weise die Kommunikation zwischen dem Schlüssel und dem Kraftfahrzeug sowie die Energieversorgung für den Schlüssel bei leerer Schlüsselbatterie gleichzeitig ermöglicht. Der Schlüssel wird dazu lediglich vor den Türgriff gehalten und es startet eine automatische Kommunikation einschließlich dessen Authentifizierung. Die Tür wird durch die Fahrzeug-Elektronik entriegelt. Ein Notschlüssel ist für diesen Fall also nicht mehr notwendig.

In einfacher Art und Weise wird bei erschöpftem ersten Energiespeicher das codierte Betriebssignal zur Authentifikation der zweiten Einrichtung mittels des Transponders sowie des Energieübertragungsmittels übertragen. Sollte somit die Fahrzeugbatterie leer sein, wobei die Schlüsselbatterie jedoch funktional ist, dann wird folglich der Schlüssel ebenfalls vor den Türgriff gehalten. Durch Drücken der Funkfembedienungstaste auf dem Schlüssel kommuniziert der Transponder aktiv mit der im Fahrzeuggriff bzw. im Türgriff integrierten Spule. Die Empfängerseite in der Tür wird dabei durch die kleine Notbatterie versorgt, falls die Fahrzeugbatterie nicht mehr genügend Energie liefern kann. Ein Notschlüssel ist also auch für diesen Fall nicht mehr notwendig.

In kostengünstiger Art handelt es sich bei dem Transponder um einen passiven RFID(Radio Frequency Identification)-Transponder. Der Transponder arbeitet mit einer RFID-Frequenz im LF(Low Frequency)-Bereich, also im Kilo-Hertz-Bereich mit beispielsweise 120 oder 125kHz. Um eine hohe Funktionssicherheit für den Notzugang zu gewährleisten, wird erfindungsgemäß der Zustand der Notbatterie mittels eines Diagnose-Steuergerätes überwacht. Dadurch ist bei Bedarf die Notbatterie austauschbar, was beispielsweise im Rahmen der Servicearbeiten für das Kraftfahrzeug erfolgen kann.

In kompakter Art und Weise kann im Schließelement, und zwar insbesondere in der Autotüre, ein Türschloss mit einem Ver- und/oder Entriegelungsmechanismus angeordnet sein. Weiter kann ein Aktor mit dem Ver- und/oder Entriegelungsmechanismus in Wirkverbindung stehen. Schließlich kann nach positiver Authentifikation der zweiten Einrichtung der Aktor den Ver- und/oder Entriegelungsmechanismus für das Türschloss auslösen.

Um eine besonders ergonomische Bedienung durch den Benutzer zu gewährleisten, ist das weitere Energieübertragungsmittel im Bereich der Mittelkonsole angeordnet. Die zum Starten des Fahrzeugs notwendige Energie wird dann vom ersten Energiespeicher mittels der LF-Spule in der Mittelkonsole bereitgestellt.

Die Erfindung stellt weiterhin eine Vorrichtung mit einem ver- und/oder entriegelbaren Schließelement und mit einem elektronischen Schließsystem bereit. Bei dem Schließelement handelt es sich um eine Autotür für ein Kraftfahrzeug. Das Schließsystem umfasst eine wenigstens zwei Zustände besitzende, als Steuereinrichtung ausgebildete erste Einrichtung und eine zugehörige, in der Art eines elektronischen Schlüssels, eines ID-Gebers, einer Chipkarte o. dgl. ausgebildete zweite Einrichtung. Die beiden Einrichtungen besitzen zu deren bestimmungsgemäßen Betrieb Sender und/oder Empfänger für insbesondere elektromagnetische Signale. Insbesondere handelt es sich bei wenigstens einem der zwischen der zweiten Einrichtung und der ersten Einrichtung übertragenen Signale um ein codiertes Betriebssignal zur Authentifikation der zweiten Einrichtung. Somit ist nach positiver Auswertung des übertragenen Betriebssignals bei berechtigter zweiter Einrichtung eine Änderung des Zustandes der ersten Einrichtung bewirkbar. Es sind ein erster Energiespeicher zur Energieversorgung der ersten Einrichtung für deren bestimmungsgemäßen Betrieb sowie ein zweiter Energiespeicher zur Energieversorgung der zweiten Einrichtung für deren bestimmungsgemäßen Betrieb vorgesehen. Weiter ist der ersten Einrichtung ein Energieübertragungsmittel, und zwar insbesondere eine Spule in der Art einer LF(Low Frequency)-Spule, zur Übertragung von Energie aus dem ersten Energiespeicher zugeordnet. Die zweite Einrichtung umfasst einen Transponder, derart dass Energie mittels des Energieübertragungsmittels vom ersten Energiespeicher auf die zweite Einrichtung zu deren Notbetrieb bei erschöpftem zweiten Energiespeicher übertragbar ist. Schließlich ist der ersten Einrichtung eine Notbatterie mit einer derartigen Speicherkapazität zugeordnet, dass deren Energie bei erschöpftem ersten Energiespeicher zum Notbetrieb der ersten Einrichtung unter wenigstens einer einmaligen Änderung des Zustandes der ersten Einrichtung ausreichend ist. Falls gewünscht kann die Speicherkapazität der Notbatterie auch eine derartige Größe aufweisen, dass eine mehrmalige Änderung des Zustandes der ersten Einrichtung im Notbetrieb ermöglicht ist.

Für eine besonders bevorzugte Ausgestaltung des erfindungsgemäßen Schließsystems ist nachfolgendes festzustellen.

Es soll ein System zur Entriegelung der Fahrzeugtür für den Notfall bereitgestellt werden. Im Normalfall wird die Tür durch die Funkfernbedienung des Schlüssels und die dadurch ausgelöste Aktorik im Fahrzeug entriegelt. Voraussetzung dafür ist das Vorhandensein von ausreichender Energie im Schlüssel, um die Funkbotschaft abzusetzen und auch ausreichende Energie auf Fahrzeugseite, um die Steuergeräte und/oder Aktoren zum Entriegeln zu bedienen.

Für den Fall, dass die Fahrzeugbatterie leer ist oder für den Fall, dass die Schlüsselbatterie leer ist, ist bisher in der Fahrertür ein mechanisches Schloss integriert. Im Schlüssel ist ein mechanischer Notschlüssel integriert, welcher zu dem mechanischen Fahrzeugschloss passt. Ziel der vorliegenden Erfindung ist es, den Notschlüssel und das Schloss einzusparen.

Ein Transponder dient im Schlüssel weiterhin zum Starten des Fahrzeuges in der Mittelkonsole bei leerer Schlüsselbatterie. Die notwendige Energie kommt von einer LF-Spule in der Mittelkonsole. Eine ähnliche Spule wird in den Bereich des Türgriffs integriert und sorgt für die Kommunikation und die Energieversorgung für den Schlüssel bei leerer Schlüsselbatterie. Der Schlüssel wird dazu vor den Türgriff gehalten und es startet eine automatische Kommunikation inclusive Authentifizierung. Die Tür wird durch die Fahrzeug-Elektronik entriegelt. Ein Notschlüssel ist nicht mehr notwendig für diesen Fall.

Wenn die Fahrzeugbatterie leer sein sollte, die Schlüsselbatterie aber funktional ist, wird der Schlüssel ebenfalls vor den Türgriff gehalten. Durch Drücken der Funkfernbedienungstaste auf dem Schlüssel wird der Transponder aktiv mit der im Türgriff des Fahrzeugs integrierten Spule kommunizieren. Die Empfängerseite in der Tür wird durch eine kleine Batterie versorgt, falls die Fahrzeugbatterie nicht mehr genügend Energie liefern kann. Diese kleine Batterie ist so dimensioniert, dass mehrere Entriegelungszyklen möglich sind. Der Zustand der kleinen Batterie in der Tür wird durch die Fahrzeug-Diagnose überwacht und bei Bedarf wird die kleine Batterie während des Services ausgetauscht. Der Empfänger und der Fahrzeugschlüssel authentifizieren sich. Anschließend wird im Türgriff durch den Empfänger mit Hilfe eines Aktors ein Entriegelungsmechanismus im Türschloss ausgelöst. Für diesen Fall ist ebenfalls kein Notschlüssel oder mechanisches Schloss notwendig.

Der Fall, das beide Batterien leer sind, also sowohl die Fahrzeugbatterie als auch die Schlüsselbatterie gleichzeitig erschöpft sind, ist sehr unwahrscheinlich. Daher braucht dieser Fall nicht weiter berücksichtigt zu werden.

Die mit der Erfindung erzielten Vorteile bestehen insbesondere darin, dass auf den bisher im Fahrzeugschlüssel integrierten mechanischen Notschlüssel verzichtet werden kann.

Außerdem spart der Kraftfahrzeughersteller das bisher notwendige mechanische Schloss an der Fahrertüre ein. Damit ist ein preisgünstiges Schließsystem, insbesondere mit Keyless-Funktionalität, bereitgestellt.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein mit einem Schließsystem ausgestattetes Kraftfahrzeug,
- Fig. 2: ein schematisches Blockschaltbild des Schließsystems,
- Fig. 3: ein Blockschaltbild zur näheren Ausgestaltung der zweiten Einrichtung des Schließsystems,
- Fig. 4: ein Blockschaltbild zur näheren Ausgestaltung der ersten Einrichtung des Schließsystems und

Fig. 5 eine mit einem Schließsystem ausgestattete Immobilie, wobei das Schließsystem nicht zu den Ausführungsbeispielen gehört.

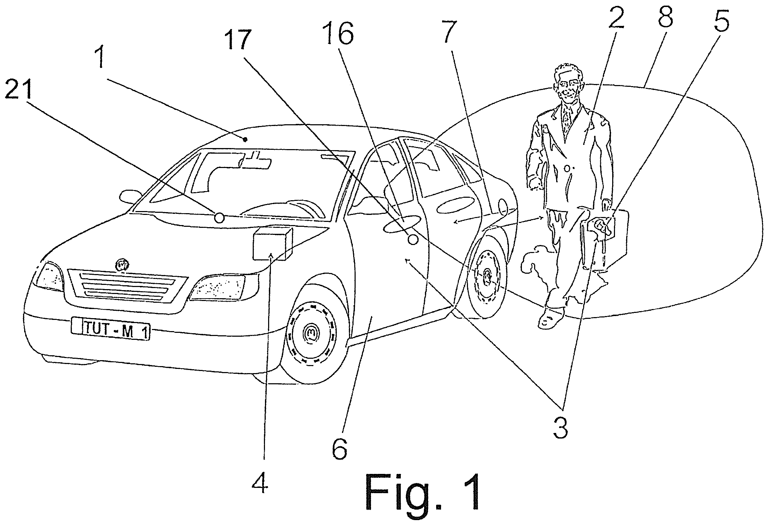

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfasst. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Sender und/oder Empfänger zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal. Das codierte Betriebssignal 7 dient zur Authentifikation der zweiten Einrichtung 5, womit bei berechtigter zweiter Einrichtung 5 nach positiver Auswertung des übertragenen Betriebssignals 7 eine Änderung des Zustandes der ersten Einrichtung 4 bewirkbar ist. Die Übertragung des codierten Betriebssignals 7 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 7 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat.

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses (elektronisches Zündschloss) und/oder der Lenkradverriegelung (elektrische Lenkradverriegelung). Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 7 zur Authentifikation der zweiten Einrichtung 5 erfolgt dann, wenn der berechtigte Benutzer 2 sich im Kraftfahrzeug 1 befindet und einen Start/Stop-Schalter betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16, des Heckgriffs o. dgl. handeln. Hierzu ist im Türgriff 16, Heckgriff o. dgl. des Kraftfahrzeugs 1 ein Schalter angeordnet. Wird ein beispielsweise kapazitiv arbeitender Näherungssensor verwendet, so kann vom Sensor die Annäherung der Hand des Benutzers 2 an den Türgriff 16 bzw. den Heckgriff detektiert werden. Für die Fahrberechtigung befindet sich der vom Benutzer 2 manuell betätigbare Start/Stop-Schalter im Kraftfahrzeug 1. Zweckmäßigerweise ist der Start/Stop-Schalter am Gangwahlhebel, am Zündschloss, im Armaturenbrett, in der Mittelkonsole o. dgl. im Kraftfahrzeug 1 angeordnet.

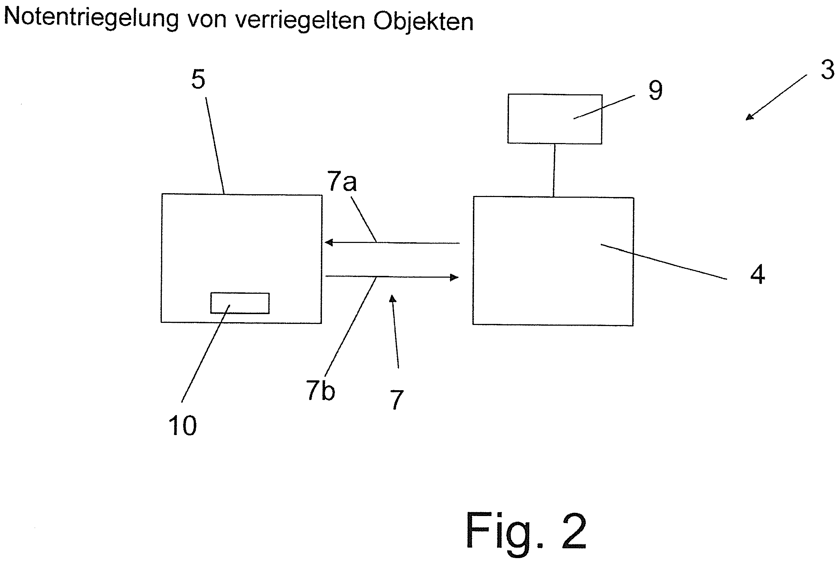

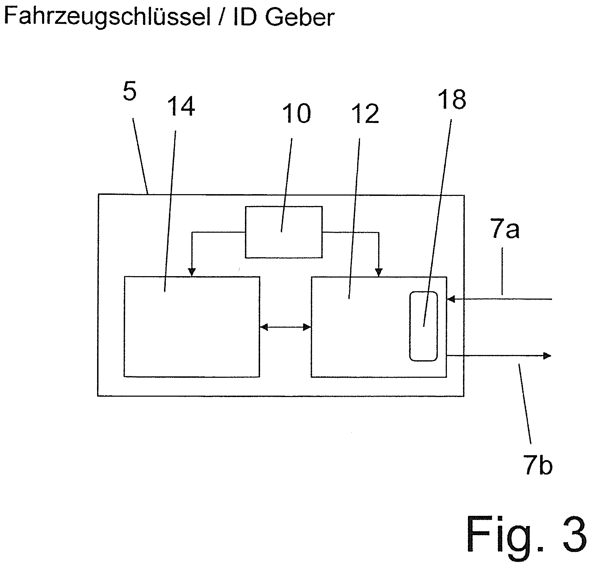

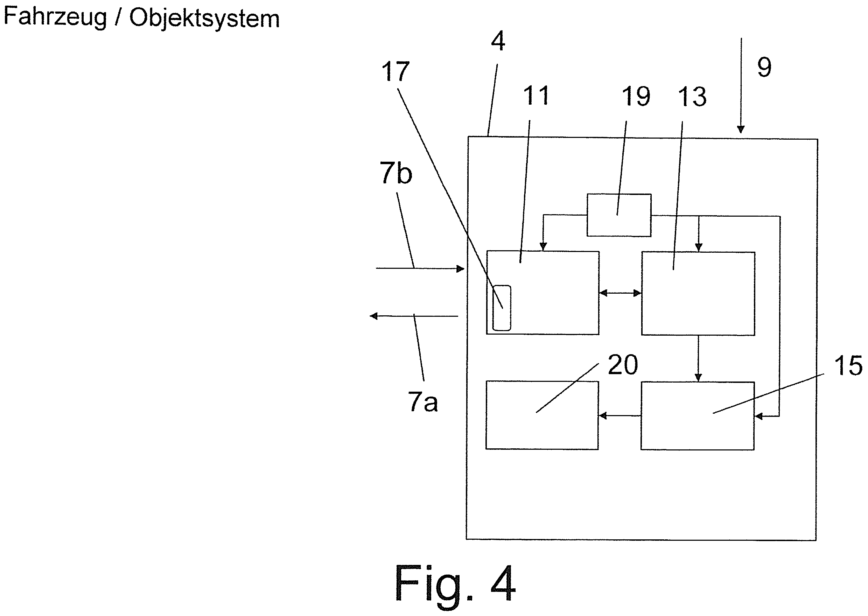

Anhand der Fig. 2 bis Fig. 4 ist die nähere Ausgestaltung des Schließsystems 3 dargestellt. Wie man in Fig. 2 sieht, erfolgt die Kommunikation zwischen der ersten Einrichtung 4 und der zweiten Einrichtung 5 mittels der Signale 7, wobei Signale 7a von der ersten Einrichtung 4 zur zweiten Einrichtung 5 sowie Signale 7b von der zweiten Einrichtung 5 zur ersten Einrichtung 4 übertragen werden. Zur Übertragung der Signale 7a, 7b besitzt gemäß Fig. 3 die zweite Einrichtung 5 einen Sender und/oder Empfänger 12 und gemäß Fig. 4 die erste Einrichtung 4 einen Sender und/oder Empfänger 11. Zur Erzeugung und/oder Auswertung des codierten Betriebssignals 7 ist in der ersten Einrichtung 4 sowie in der zweiten Einrichtung 5 jeweils eine Authentifizierungseinheit 13, 14 angeordnet. Wie man schließlich der Fig. 4 weiter entnimmt, befindet sich in der ersten Einrichtung 4 noch ein von der Authentifizierungseinheit 13 ansteuerbarer Aktor 15, der mit dem Ver- und/oder Entriegelungsmechanismus 20 in Wirkverbindung steht und seinerseits nach positiver Authentifikation der zweiten Einrichtung 5 den Ver- und/oder Entriegelungsmechanismus 20 für die Autotüre 6, die Heckklappe o. dgl. betätigt. Ein solches Türschloss mit einem Ver- und/oder Entriegelungsmechanismus 20 ist zweckmäßigerweise in der Autotüre 6 und/oder der Heckklappe angeordnet.

Wie man weiter anhand der Fig. 2 sieht, steht die erste Einrichtung 4 mit der aufladbaren Fahrzeugbatterie 9 als einem ersten Energiespeicher in elektrischer Verbindung. Der erste Energiespeicher 9 dient zur Energieversorgung der ersten Einrichtung 4 für deren bestimmungsgemäßen Betrieb. In der zweiten Einrichtung 5 befindet sich eine wechselbare Schlüsselbatterie 10 als ein zweiter Energiespeicher. Der zweite Energiespeicher 10 dient zur Energieversorgung der zweiten Einrichtung 5 für deren bestimmungsgemäßen Betrieb. Nach einer gewissen Betriebsdauer kann der zweite Energiespeicher 10 erschöpft sein. Ebenso kann der erste Energiespeicher 9 in Notfällen geleert sein. In diesen Fällen ist ein bestimmungsgemäßer Betrieb des Schließsystems 3 nicht möglich. Die nähere Ausgestaltung des Schließsystems 3 für dessen Notbetrieb in solchen Fällen ist nachfolgend näher erläutert.

Wie man in Fig. 4 sieht, ist der ersten Einrichtung 4 ein Energieübertragungsmittel 17 zur Übertragung von Energie aus dem ersten Energiespeicher 9 zugeordnet. Vorliegend handelt es sich bei dem Energieübertragungsmittel 17 um eine Spule in der Art einer LF(Low Frequency)-Spule. Die zweite Einrichtung 5 umfasst einen Transponder 18, wobei es sich bei dem Transponder 18 um einen passiven RFID(Radio Frequency Identification)-Transponder handeln kann, derart dass Energie mittels des Energieübertragungsmittels 17 vom ersten Energiespeicher 9 auf die zweite Einrichtung 5 zu deren Notbetrieb bei erschöpftem zweiten Energiespeicher 10 übertragbar ist, wie man in Fig. 3 sieht. Diese Energie für den Notbetrieb wird dabei mittels des Signals 7a übertragen. Weiterhin ist der ersten Einrichtung 4 eine Notbatterie 19 mit einer derartigen Speicherkapazität zugeordnet, dass deren Energie bei erschöpftem ersten Energiespeicher 9 zum Notbetrieb der ersten Einrichtung 4 unter wenigstens einer einmaligen, insbesondere einer mehrmaligen, Änderung des Zustandes der ersten Einrichtung 4 ausreichend ist. Insbesondere lässt sich mit Hilfe dieser Energie aus der Notbatterie 19 der Ver- und/oder Entriegelungsmechanismus 20 mit Hilfe des Aktors 15 wenigstens einmal betätigen.

Das Energieübertragungsmittel 17, und zwar insbesondere die Spule in der Art einer LF(Low Frequency)-Spule 17, kann zweckmäßigerweise im Bereich des Türgriffs 16 in und/oder an der Autotüre 6 integriert angeordnet sein, wie man anhand von Fig. 1 sieht. Wie bereits erwähnt, kann zusätzlich zur Energieversorgung mittels des Energieübertragungsmittels 17 für die zweite Einrichtung 5 das codierte Betriebssignal 7a, 7b zur Authentifikation der zweiten Einrichtung 5 mittels des Transponders 18 sowie des Energieübertragungsmittels 17 bei erschöpftem zweiten Energiespeicher 10 übertragen werden. Mit anderen Worten wird bei leerer Schlüsselbatterie 10 der Schlüssel 5 zur Kommunikation und Energieversorgung für den Schlüssel 5 vor den Türgriff 16 an die LF-Spule 17 gehalten und es startet eine automatische Kommunikation inclusive Authentifizierung. Bei erfolgreicher Authentifizierung wird die Autotüre 6 vom Ver- und/oder Entriegelungsmechanismus 20 entriegelt. Ein Notschlüssel ist insoweit nicht mehr notwendig.

Bei erschöpftem ersten Energiespeicher 9 erfolgt die Not-Energieversorgung der ersten Einrichtung 4 über die Notbatterie 19. Das codierte Betriebssignal 7a, 7b zur Authentifikation der zweiten Einrichtung 5 wird wiederum mittels des Transponders 18 sowie des Energieübertragungsmittels 17 übertragen. Mit anderen Worten wird bei leerer Fahrzeugbatterie 9, wobei jedoch die Schlüsselbatterie 10 funktional ist, der Schlüssel 5 ebenfalls vor den Türgriff 16 gehalten. Durch Drücken der Funkfernbedienungstaste auf dem Schlüssel 5 kommuniziert der Transponder 18 aktiv mit der im Fahrzeuggriff 16 integrierten Spule 17. Die Empfängerseite in der Autotüre 6 wird durch eine kleine Notbatterie 19 versorgt, falls die Fahrzeugbatterie 9 nicht mehr genügend Energie liefern kann. Um die Funktionsfähigkeit der Notversorgung sicherzustellen, wird zweckmäßigerweise der Zustand der Notbatterie 19 mittels eines Diagnose-Steuergerätes überwacht, derart dass bei Bedarf die Notbatterie 19 im Rahmen der Servicearbeiten für das Fahrzeug 1 austauschbar ist.

Bei erschöpftem zweiten Energiespeicher 10 ist auch die Fahrberechtigung mittels des in der zweiten Einrichtung 5 befindlichen Transponders 18 betätigbar. Hierzu ist ein weiteres Energieübertragungsmittel 21, und zwar vorliegend wiederum eine Spule in der Art einer LF(Low Frequency)-Spule 21, im Kraftfahrzeug 1 zur Übertragung von Energie aus dem ersten Energiespeicher 9 auf die zweite Einrichtung 5 vorgesehen. Das weitere Energieübertragungsmittel 21 ist im Bereich der Mittelkonsole im Kraftfahrzeug 1 angeordnet, wie in der Fig. 1 schematisch angedeutet ist. Mit anderen Worten kommt die notwendige Energie für die Kommunikation zum Starten des Fahrzeuges 1 bei leerer Schlüsselbatterie 10 von der LF-Spule 21 in der Mittelkonsole. Der Transponder 18 sowie die LF-Spulen 17, 21 arbeiten vorzugsweise mit einer RFID-Frequenz im Kilo-Hertz-Bereich. Selbstverständlich kann jedoch auch eine RFID-Frequenz im Mega-Hertz- oder Giga-Hertz-Bereich gewählt werden.

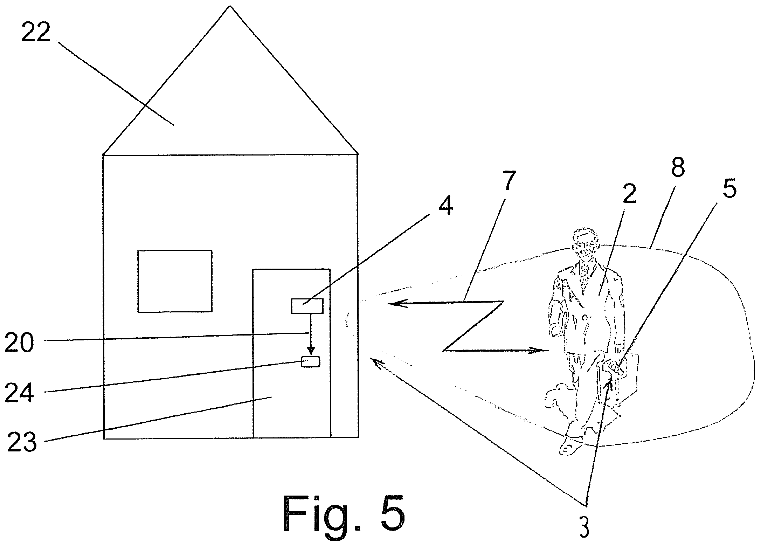

Ein Schließelement 23 ist in Fig. 5 zu sehen. Dort handelt es sich bei dem Schließelement 23 um die Haustüre an einer Immobilie 22. Die Haustüre 23 im Haus 22 ist mit einem Schließsystem 3 ausgestattet, das wiederum eine wenigstens zwei Zustände besitzende, als Steuereinrichtung ausgebildete erste Einrichtung 4 und eine im Besitz des berechtigten Benutzers 2 befindliche zugehörige, in der Art eines elektronischen Schlüssels, eines ID-Gebers, einer Chipkarte o. dgl. ausgebildete zweite Einrichtung 5 umfasst. Die beiden Einrichtungen 4, 5 besitzen gemäß Fig. 3 und Fig. 4 zu deren bestimmungsgemäßen Betrieb Sender und/oder Empfänger 11, 12 für elektromagnetische Signale 7. Bei wenigstens einem der zwischen der zweiten Einrichtung 5 und der ersten Einrichtung 4 übertragenen Signale 7 handelt es sich um ein codiertes Betriebssignal zur Authentifikation der zweiten Einrichtung 5, so dass nach positiver Auswertung des übertragenen Betriebssignals 7 bei berechtigter zweiter Einrichtung 5 eine Änderung des Zustandes der ersten Einrichtung 4 bewirkbar ist. Aufgrund dieser Zustandsänderung der ersten Einrichtung 4 erfolgt eine Entriegelung des Ver- und/oder Entriegelungsmechanismus 20 im Türschloss 24 der Haustüre 23.

Wie bereits weiter oben anhand der Fig. 2 beschrieben sind wiederum ein erster Energiespeicher 9 zur Energieversorgung der ersten Einrichtung 4 für deren bestimmungsgemäßen Betrieb sowie ein zweiter Energiespeicher 10 zur Energieversorgung der zweiten Einrichtung 5 für deren bestimmungsgemäßen Betrieb vorgesehen. Gemäß Fig. 4 ist der ersten Einrichtung 4 ein Energieübertragungsmittel 17 in der Art einer LF(Low Frequency)-Spule zur Übertragung von Energie aus dem ersten Energiespeicher 9 zugeordnet. Die zweite Einrichtung 5 umfasst gemäß Fig. 3 einen Transponder 18, derart dass Energie mittels des Energieübertragungsmittels 17 vom ersten Energiespeicher 9 auf die zweite Einrichtung 5 zu deren Notbetrieb bei erschöpftem zweiten Energiespeicher 10 übertragbar ist. Der ersten Einrichtung 4 ist gemäß Fig. 4 eine Notbatterie 19 mit einer derartigen Speicherkapazität zugeordnet, dass deren Energie bei erschöpftem ersten Energiespeicher 9 zum Notbetrieb der ersten Einrichtung 4 unter wenigstens einer einmaligen, insbesondere einer mehrmaligen, Änderung des Zustandes der ersten Einrichtung 4 ausreichend ist. Es ist hier noch zu erwähnen, dass die erste Einrichtung 4 in der Immobilie 22 auch mit Energie aus dem Netz 9 zu deren Betrieb versorgt werden kann, so dass die Notbatterie 19 zum Notbetrieb bei einem Netzausfall Verwendung findet.

### Bezugszeichen-Liste:

- 1:: Kraftfahrzeug / Fahrzeug
- 2:: (berechtigter) Benutzer
- 3:: Schließsystem
- 4:: erste Einrichtung
- 5:: zweite Einrichtung / Schlüssel
- 6:: Autotüre
- 7:: Signal / Betriebssignal
- 7a:: Signal (von der ersten zur zweiten Einrichtung) / Betriebssignal
- 7b:: Signal (von der zweiten zur ersten Einrichtung) / Betriebssignal
- 8:: Wirkbereich
- 9:: erster Energiespeicher / Fahrzeugbatterie / Netz
- 10:: zweiter Energiespeicher / Schlüsselbatterie
- 11,12:: Sender und/oder Empfänger
- 13,14:: Authentifizierungseinheit
- 15:: Aktor
- 16:: Türgriff / Fahrzeuggriff
- 17:: Energieübertragungsmittel / LF-Spule
- 18:: Transponder
- 19:: Notbatterie
- 20:: Ver- und/oder Entriegelungsmechanismus
- 21:: weiteres Energieübertragungsmittel / LF-Spule
- 22:: Immobilie / Haus
- 23:: Schließelement / Haustüre
- 24:: Türschloss

## Patentansprüche

1. Schließsystem für die Zugangs- und/oder Fahrberechtigung bei einem Kraftfahrzeug (1) in der Art einer KeylessEntry/Go-Funktionalität mit einer wenigstens zwei Zustände besitzenden, als Steuereinrichtung ausgebildeten ersten Einrichtung (4), wie einer Steuereinrichtung zur Ent- und/oder Verriegelung der Autotüren (6), der Heckklappe, und mit einer zugehörigen, in der Art eines elektronischen Schlüssels, eines ID-Gebers, einer Chipkarte ausgebildeten zweiten Einrichtung (5), wobei die beiden Einrichtungen (4, 5) zu deren bestimmungsgemäßen Betrieb Sender und/oder Empfänger (11, 12) für elektromagnetische Signale (7) besitzen, wobei es sich bei wenigstens einem der zwischen der zweiten Einrichtung (5) und der ersten Einrichtung (4) übertragenen Signale (7) um ein codiertes Betriebssignal zur Authentifikation der zweiten Einrichtung (5) handelt, so dass nach positiver Auswertung des übertragenen Betriebssignals (7) bei berechtigter zweiter Einrichtung (5) eine Änderung des Zustandes der ersten Einrichtung (4) bewirkbar ist, und mit einem ersten Energiespeicher (9) zur Energieversorgung der ersten Einrichtung (4) für deren bestimmungsgemäßen Betrieb sowie mit einem zweiten Energiespeicher (10) zur Energieversorgung der zweiten Einrichtung (5) für deren bestimmungsgemäßen Betrieb, wobei der ersten Einrichtung (4) eine im Bereich des Türgriffs (16) in und/oder an der Autotüre (6) angeordnete Spule als ein Energieübertragungsmittel (17) zur Übertragung von Energie aus dem ersten Energiespeicher (9) zugeordnet ist, wobei die zweite Einrichtung (5) einen Transponder (18) umfasst, derart dass Energie mittels des Energieübertragungsmittels (17) vom ersten Energiespeicher (9) auf die zweite Einrichtung (5) zu deren Notbetrieb bei erschöpftem zweiten Energiespeicher (10) übertragbar ist, und wobei der ersten Einrichtung (4) eine Notbatterie (19, mit einer derartigen Speicherkapazität zugeordnet ist, dass deren Energie bei erschöpftem ersten Energiespeicher (9) zum Notbetrieb der ersten Einrichtung (4) unter wenigstens einer einmaligen, insbesondere einer mehrmaligen, Änderung des Zustandes der ersten Einrichtung (4) ausreichend ist, wobei die als Energieübertragungsmittel dienende Spule in der Art einer LF(Low Frequency)-Spule ausgebildet ist und dass eine weitere Spule in der Art einer LF(Low Frequency)-Spule als ein weiteres Energieübertragungsmittel (21) im Kraftfahrzeug (1) zur Übertragung von Energie aus dem ersten Energiespeicher (9) auf die zweite Einrichtung (5) vorgesehen ist, dass bei erschöpftem zweiten Energiespeicher (10) die Fahrberechtigung mittels des Transponders (18) betätigbar ist, wobei die übertragene Energie für die Kommunikation zum Starten des Kraftfahrzeugs (1) dient, dass das weitere Energieübertragungsmittel (21) im Bereich der Mittelkonsole angeordnet ist, dass zusätzlich zur Energieversorgung mittels des Energieübertragungsmittels (17) für die zweite Einrichtung (5) das codierte Betriebssignal (7b) zur Authentifikation der zweiten Einrichtung (5) mittels des Transponders (18) sowie des Energieübertragungsmittels (17) bei erschöpftem zweiten Energiespeicher (10) übertragen wird und dass bei erschöpftem ersten Energiespeicher (9) das codierte Betriebssignal (7b) zur Authentifikation der zweiten Einrichtung (5) mittels des Transponders (18) sowie des Energieübertragungsmittels (17) übertragen wird, wobei derselbe Transponder (18) zur Energieaufnahme und Signalübertragung sowohl mit der Spule der Schließanlage als auch mit der weiteren Spule in der Mittelkonsole ausgebildet ist und wobei der Zustand der Notbatterie (19) mittels eines Diagnose-Steuergerätes überwacht wird, derart dass bei Bedarf die Notbatterie (19) austauschbar ist.

2. Schließsystem nach Anspruch 1, **dadurch gekennzeichnet, dass** es sich bei dem Transponder (18) um einen passiven RFID(Radio Frequency Identification)-Transponder handelt, und dass vorzugsweise der Transponder mit einer RFID-Frequenz im Kilo-Hertz- oder Mega-Hertz- oder Giga-Hertz-Bereich arbeitet.

3. Schließsystem nach einem der Ansprüche 1 oder 2, **dadurch gekennzeichnet, dass** im Schließelement, insbesondere in der Autotüre (6), ein Türschloss mit einem Ver- und/oder Entriegelungsmechanismus (20) angeordnet ist, dass vorzugsweise ein Aktor (15) mit dem Ver- und/oder Entriegelungsmechanismus (20) in Wirkverbindung steht, und dass weiter vorzugsweise nach positiver Authentifikation der zweiten Einrichtung (5) der Aktor (15) den Ver- und/oder Entriegelungsmechanismus (20) für das Türschloss auslöst.

4. Vorrichtung mit einem ver- und/oder entriegelbaren Schließelement (23) und mit einem Schließsystem (3), wobei das Schließsystem (3) nach einem der vorhergehenden Ansprüche ausgebildet ist.

5. Vorrichtung nach Anspruch 4, **dadurch gekennzeichnet, dass** es sich bei dem Schließelement (23) um eine Türe, wie um eine Autotüre (6) für ein Kraftfahrzeug (1) handelt.

## Claims

1. A locking system for the access and/or driving authorization in a motor vehicle (1) in the manner of a keyless entry/go functionality comprising a first device (4) having at least two states and being formed as control device, such as a control device for unlocking and/or locking the car doors (6), the tailgate, and comprising an associated second device (5) formed in the manner of an electronic key, an ID signal transmitter, a chip card, wherein the two devices (4, 5) have, for their intended operation, transmitters and/or receivers (11, 12) for electromagnetic signals (7), wherein at least one of the signals (7) transmitted between the second device (5) and the first device (4) is an encoded operating signal for authenticating the second device (5), so that, after positive evaluation of the transmitted operating signal (7) when the second device (5) is authorized, a change of the state of the first device (4) can be effected, and comprising a first energy store (9) for supplying energy to the first device (4) for the intended operation thereof as well as comprising a second energy store (10) for supplying energy to the second device (5) for the intended operation thereof, wherein a coil arranged in the region of the door handle (16) in and/or at the car door (6) is assigned to the first device (4) as an energy transmission means (17) for transmitting energy from the first energy store (9), wherein the second device (5) comprises a transponder (18) in such a way that energy can be transmitted from the first energy store (9) to the second device (5) by means of the energy transmission means (17) for the emergency operation of said second device when the second energy store (10) is depleted, and wherein the first device (4) is assigned an emergency battery (19) having such a storage capacity that when the first energy store (9) is depleted, the energy of said emergency battery is sufficient for the emergency operation of the first device (4) with at least a one-time, in particular a repeated, change of the state of the first device (4), wherein the coil, which serves as energy transmission means, is formed in the manner of an LF (Low Frequency) coil, and that a further coil in the manner of an LF (Low Frequency) coil is provided in the motor vehicle (1) as further energy transmission means (21) to transmit energy from the first energy store (9) to the second device (5), that when the second energy store (10) is depleted, the driving authorization can be activated by means of the transponder (18), wherein the transmitted energy serves for the communication to start the motor vehicle (1), that the further energy transmission means (21) is arranged in the region of the center console, that in addition to the energy supply by means of the energy transmission means (17) for the second device (5), the encoded operating signal (7b) for authenticating the second device (5) is transmitted by means of the transponder (18) as well as the energy transmission means (17) when the second energy store (10) is depleted, and that when the first energy store (9) is depleted, the encoded operating signal (7b) for authenticating the second device (5) is transmitted by means of the transponder (18) as well as the energy transmission means (17), wherein the same transponder (18) for energy consumption and signal transmission is formed with the coil of the locking mechanism as well as with the further coil in the center console, and wherein the state of the emergency battery (19) is monitored by means of a diagnostic control unit in such a way that the emergency battery (19) can be replaced, if necessary.

2. The locking system according to claim 1, **characterized in that** the transponder (18) is a passive RFID (Radio Frequency Identification) transponder, and that the transponder preferably operates with an RFID frequency in the kilohertz or megahertz or gigahertz range.

3. The locking system according to any one of claims 1 or 2, **characterized in that** a door lock comprising a locking and/or unlocking mechanism (20) is arranged in the locking element, in particular in the car door (6), that an actuator (15) is preferably operatively connected to the locking and/or unlocking mechanism (20), and that the actuator (15) further preferably triggers the locking and/or unlocking mechanism (20) for the door lock after positive authentication of the second device (5).

4. An apparatus comprising a lockable and/or unlockable locking element (23) and comprising a locking system (3), wherein the locking system (3) is formed according to any one of the preceding claims.

5. The apparatus according to claim 4, **characterized in that** the locking element (23) is a door, such as a car door (6), for a motor vehicle (1).

## Revendications

1. Système de fermeture pour l'autorisation d'accès et/ou de conduite d'un véhicule automobile (1), du type fonctionnalité KeylessEntry/Go, équipé d'un premier dispositif (4) possédant au moins deux états et conçu comme dispositif de commande, comme un dispositif de commande pour le déverrouillage et/ou le verrouillage des portes de voiture (6), du hayon, et d'un deuxième dispositif (5) correspondant, du type clé électronique, codeur ID, carte à puce, les deux dispositifs (4, 5) possédant, pour un fonctionnement conforme à l'emploi prévu, des émetteurs et/ou des récepteurs (11, 12) pour des signaux électromagnétiques (7), au moins un des signaux (7) transmis entre le deuxième dispositif (5) et le premier dispositif (4) étant un signal d'exploitation codé pour l'authentification du deuxième dispositif (5) de sorte que, après une évaluation positive du signal d'exploitation (7) transmis sur un deuxième dispositif (5) autorisé, une modification de l'état du premier dispositif (4) puisse être réalisée, et équipé d'un premier accumulateur d'énergie (9) pour l'approvisionnement en énergie du premier dispositif (4) pour un fonctionnement conforme à l'emploi prévu et d'un deuxième accumulateur d'énergie (10) pour l'approvisionnement en énergie du deuxième dispositif (5) pour un fonctionnement conforme à l'emploi prévu, une bobine disposée dans la zone de la poignée de porte (16) dans et/ou sur la porte de voiture (6) étant affectée au premier dispositif (4) en tant que moyen de transmission d'énergie (17) pour la transmission d'énergie depuis le premier accumulateur d'énergie (9), le deuxième dispositif (5) comprenant un transpondeur (18) de façon à ce que l'énergie soit transmissible du premier accumulateur d'énergie (9) au deuxième dispositif (5) à l'aide du moyen de transmission d'énergie (17) pour son fonctionnement de secours lorsque le deuxième accumulateur d'énergie (10) est épuisé, et une batterie de secours (19) étant affectée au premier dispositif (4), avec une capacité de stockage de façon à ce que son énergie soit suffisante pour le fonctionnement de secours du premier dispositif (4) compte tenu au moins d'une modification unique, en particulier répétée, de l'état du premier dispositif (4),
la bobine servant de moyen de transmission d'énergie étant du type bobine LF (Low Frequency) et une autre bobine du type bobine LF (Low Frequency) étant prévue comme autre moyen de transmission d'énergie (21) dans le véhicule automobile (1) pour la transmission d'énergie du premier accumulateur d'énergie (9) au deuxième dispositif (5), l'autorisation de conduite pouvant être activée au moyen du transpondeur (18) lorsque le deuxième accumulateur d'énergie (10) est épuisé, l'énergie transmise permettant la communication pour le démarrage du véhicule automobile (1), l'autre moyen de transmission d'énergie (21) étant disposé dans la zone de la console centrale, en plus de l'approvisionnement en énergie à l'aide du moyen de transmission d'énergie (17) pour le deuxième dispositif (5), le signal d'exploitation (7b) codé pour l'authentification du deuxième dispositif (5) étant transmis au moyen du transpondeur (18) et du moyen de transmission d'énergie (17) lorsque le deuxième accumulateur d'énergie (10) est épuisé, et le signal d'exploitation (7b) codé pour l'authentification du deuxième dispositif (5) étant transmis au moyen du transpondeur (18) et du moyen de transmission d'énergie (17) lorsque le premier accumulateur d'énergie (9) est épuisé, le même transpondeur (18) pour la consommation d'énergie et la transmission du signal étant conçu aussi bien avec la bobine du système de fermeture qu'avec l'autre bobine dans la console centrale, et l'état de la batterie de secours (19) étant contrôlé au moyen d'un appareil de commande de diagnostic de façon à ce que la batterie de secours (19) puisse être remplacée, le cas échéant.

2. Système de fermeture conformément à la revendication 1, **caractérisé en ce que** le transpondeur (18) est un transpondeur RFID (Radio Frequency Identification) passif, et **en ce que** préférablement le transpondeur fonctionne avec une fréquence RFID en kilohertz ou mégahertz ou gigahertz.

3. Système de fermeture conformément à l'une des revendications 1 ou 2, **caractérisé en ce qu'**une serrure de porte avec un mécanisme de verrouillage et/ou déverrouillage (20) est disposée dans l'élément de fermeture, en particulier dans la porte de voiture (6), **en ce que** préférablement un acteur (15) est en liaison active avec le mécanisme de verrouillage et/ou déverrouillage (20), et **en ce que** plus préférablement, après une authentification positive du deuxième dispositif (5), l'acteur (15) déclenche le mécanisme de verrouillage et/ou déverrouillage (20) pour la serrure de porte.

4. Dispositif avec un élément de fermeture (23) verrouillable et/ou déverrouillable et avec un système de fermeture (3), le système de fermeture (3) étant conçu conformément à l'une des revendications précédentes.

5. Dispositif conformément à la revendication 4, **caractérisé en ce que** l'élément de fermeture (23) est une porte, comme par exemple une porte de voiture (6) pour un véhicule automobile (1).
